(19) Europäisches Patentamt / European Patent Office / Office européen des brevets

(11) **EP 3 161 431 B1**

(12) **FASCICULE DE BREVET EUROPEEN**

(45) Date de publication et mention de la délivrance du brevet:
**20.10.2021 Bulletin 2021/42**

(21) Numéro de dépôt: **15753708.5**

(22) Date de dépôt: **23.06.2015**

(51) Int Cl.:
*G01H 7/00* (2006.01)     *G01H 3/14* (2006.01)

(86) Numéro de dépôt international:
**PCT/FR2015/051689**

(87) Numéro de publication internationale:
**WO 2015/197975 (30.12.2015 Gazette 2015/52)**

(54) **APPAREIL ET PROCÉDÉ POUR RECONNAÎTRE AUTOMATIQUEMENT UN SIGNAL ACOUSTIQUE POUR DÉTECTER UN TYPE DE MESURE D'ACOUSTIQUE APPLIQUÉE AU BÂTIMENT**

VORRICHTUNG UND VERFAHREN ZUR AUTOMATISCHEN ERKENNUNG EINES AKUSTISCHEN SIGNALS ZUR ERKENNUNG EINES AKUSTISCHEN MESSTYPS AN EINEM GEBÄUDE

APPARATUS AND METHOD FOR AUTOMATICALLY RECOGNISING AN ACOUSTIC SIGNAL IN ORDER TO DETECT A TYPE OF ACOUSTIC MEASUREMENT APPLIED TO A BUILDING

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **26.06.2014 FR 1455976**

(43) Date de publication de la demande:
**03.05.2017 Bulletin 2017/18**

(73) Titulaire: **01 dB - Metravib**
**69760 Limonest (FR)**

(72) Inventeurs:
• **AFLALO, Erik**
**F-69380 Alix (FR)**
• **BLOQUET, Stéphane**
**F-69300 Caluire et Cuire (FR)**
• **BURILLIER, Jacques**
**F-94240 L'Hay les Roses (FR)**

(74) Mandataire: **Cabinet Beau de Loménie**
**51 avenue Jean Jaurès**
**BP 7073**
**69301 Lyon Cedex 07 (FR)**

(56) Documents cités:
• **"Fiche technique - Sonomètre-analyseur d'acoustique du batiment types 2250-J, 2270-J et 2270-K", , 1 janvier 2013 (2013-01-01), pages 1-16, XP055170229, Extrait de l'Internet: URL:http://www.bksv.com/doc/bp2191.pdf [extrait le 2015-02-17]**
• **"DUO Smart Noise Monitor Fiche Technique", , 1 septembre 2012 (2012-09-01), XP055170246, Extrait de l'Internet: URL:http://01db.acoemgroup.fr/ressource/me diatheque/NOT1506Septembre2012EDUOFichet ec hniqueFR.pdf [extrait le 2015-02-17]**

**Description**

La présente invention concerne le domaine technique de l'instrumentation acoustique de mesure permettant d'établir la qualité acoustique de bâtiments au sens général.

Dans le domaine technique du bâtiment, les nouvelles réglementations intègrent dès le stade de la conception, des exigences de performances du bâtiment aux différents types de bruits : isolement aux bruits aériens extérieurs et intérieurs, niveaux de bruits d'impacts et de bruits d'équipements.

Pour rappel, les bruits aériens extérieurs sont émis par exemple, dans l'environnement extérieur au bâtiment, par le trafic routier, ferroviaire ou aérien. Les bruits aériens intérieurs sont générés par l'occupation des locaux (TV, discussions...). Les bruits de chocs sont générés par un plancher excité en vibration (déplacements de mobiliers ou de personnes, chutes d'objets...). Les bruits d'équipements sont émis par les appareils et installations tels que les ascenseurs, ventilation mécanique simple/double flux, installation de chauffage, robinetterie, etc. La réverbération est l'effet de résonance d'un local.

Par exemple, au 1er janvier 2013 est entré en vigueur l'arrêté du 27 novembre 2012 issu du décret n°2011-604 du 30 mai 2011 relatif à l'attestation de prise en compte de la réglementation acoustique à établir à l'achèvement des travaux de bâtiments d'habitation neufs. Sont concernés tous les bâtiments d'habitation neufs, comme les bâtiments collectifs ou les maisons individuelles accolées, contiguës ou superposées à un local d'activité, dont le permis de construire a été demandé à compter du 1er janvier 2013.

Les mesures acoustiques, réalisées à l'achèvement des travaux, portent sur les bruits aériens extérieurs, les bruits aériens intérieurs, les bruits de chocs, les bruits d'équipements et sur la présence de matériaux absorbants en circulations communes.

La vérification de la qualité acoustique des bâtiments neufs nécessite une instrumentation de précision parfaitement adaptée aux contraintes d'une utilisation de terrain. D'une manière générale, cette instrumentation de mesure comprend des sonomètres, des sources de bruit directionnelles et omnidirectionnelles, des machines à chocs normalisées, ainsi que des ordinateurs et tablettes équipés d'un logiciel d'acquisition et de traitement des données.

Par exemple, « la fiche technique - Sonomètre-analyseur d'acoustique du bâtiment types 2250-J, 2270-J et 2270-K », 1 janvier 2013 (2013.01.01), pages 1-16, XP055170229 présente un dispositif pour des mesures acoustiques à l'intérieur d'un bâtiment avec l'aide d'une source sonore et d'un sonomètre en vue de réaliser le mesurage de l'isolement au bruit aérien, de l'isolement en façade et de l'isolement aux bruits d'impact.

En pratique, la réalisation des différents types de mesures d'acoustique d'un bâtiment constitue une opération délicate et relativement longue à mener à bien. Par ailleurs, cette opération nécessite généralement d'être mise en œuvre par plusieurs personnes qualifiées et chargées de faire les contrôles acoustiques comme faisant partie par exemple, des maîtres d'ouvrage, maîtres d'oeuvre, contrôleurs techniques, bureaux d'études et ingénieurs-conseils ayant une compétence en acoustique.

L'analyse des procédures de mesure connues visant à établir la qualité acoustique des bâtiments conduit à constater qu'il convient d'améliorer la productivité des mesures d'acoustiques réalisées pour un bâtiment.

L'objet de l'invention vise donc à satisfaire ce besoin en proposant une nouvelle technique adaptée pour réaliser les différents types de mesures d'acoustique d'un bâtiment imposées par les réglementations, susceptibles d'être mises en œuvre par une seule personne non spécialement qualifiée en acoustique et permettant une amélioration de la fiabilité des mesures, un gain de temps et un confort d'utilisation amélioré par rapport aux solutions antérieures connues.

Pour atteindre un tel but, l'objet de l'invention concerne un procédé pour reconnaître automatiquement un signal acoustique en vue de détecter un type de mesure d'acoustique d'un bâtiment, pris parmi différents types de mesure d'acoustique d'un bâtiment.

Le procédé selon l'invention consiste à reconnaître automatiquement un signal acoustique pour détecter un type de mesure d'acoustique d'un bâtiment, le signal acoustique étant capté par un sonomètre placé dans l'environnement du bâtiment dont les performances acoustiques sont à mesurer. Le procédé consiste à :

- détecter soit une source de bruit placée dans l'environnement du bâtiment et assurant l'émission d'un signal acoustique aléatoire ou pseudo-aléatoire soit une machine à chocs normalisée placée sur un sol du bâtiment et assurant l'émission d'un bruit de chocs normalisé,
- acquérir le signal acoustique en réponse à l'aide du sonomètre,
- analyser par bandes de fréquences le signal acoustique acquis par le sonomètre en appliquant des critères de seuil de détection pour différents types de mesures d'acoustique du bâtiment, afin d'en déduire le type de mesure d'acoustique du bâtiment réalisé, entre différents types de mesure d'acoustique du bâtiment pris selon la liste suivante :

    ° un niveau de bruit à l'émission,
    ° un niveau de bruit à la réception,
    ° un niveau de bruit de chocs,

     ° une mesure de durée de réverbération par méthode interrompue ou par méthode impulsionnelle,
     ° un niveau de bruit de fond,

- et afficher le type de mesure d'acoustique du bâtiment réalisé.

Un tel procédé offre l'avantage de détecter automatiquement le type de mesure d'acoustique d'un bâtiment, en fonction du signal acquis (émission, réception, bruit de chocs, bruit de fond, durée de réverbération) permettant un gain notable de confort d'utilisation et de temps à l'utilisateur.

Cette technique permet notamment de mesurer de manière optimisée les isolements aux bruits aériens, les mesures de niveaux de bruits de chocs et d'équipement ainsi que les durées de réverbération afin de contrôler la conformité aux réglementations.

Le procédé selon l'invention comporte également en combinaison l'une et/ou l'autre des caractéristiques additionnelles suivantes :

- à analyser le signal acoustique en comparant son niveau de pression acoustique, sur des bandes de fréquences déterminées, à des combinaisons des critères de seuil de détection, correspondant chacune à un type de mesure d'acoustique du bâtiment,
- à analyser le signal acoustique en comparant son niveau de pression acoustique, sur des bandes de fréquences déterminées, en appliquant successivement les critères de seuil de détection tant qu'un critère de seuil de détection n'est pas atteint, selon l'ordre suivant des critères de seuil de détection à savoir :

  • critère de seuil de détection pour la mesure acoustique de durée de réverbération par méthode impulsionnelle,
  • critère de seuil de détection pour la mesure acoustique du niveau de bruit à l'émission,
  • critère de seuil de détection pour la mesure acoustique de durée de réverbération par méthode interrompue,
  • critère de seuil de détection pour la mesure acoustique du niveau de bruit de chocs,
  • et critère de seuil de détection pour la mesure acoustique du niveau de bruit à la réception,

- à considérer, pour les critères de seuil de détection pour le niveau de bruit de chocs et pour le niveau de bruit à la réception, que les critères sont atteints lorsque le niveau de pression acoustique dépasse le niveau de pression minimal de ces critères,
- à détecter soit une source sonore impulsionnelle pour assurer la mesure de durée de réverbération par méthode impulsionnelle soit une source de bruit dont le signal acoustique apparaît et disparaît pendant la mesure, pour assurer la mesure de durée de réverbération par méthode interrompue,
- à analyser le signal acoustique en appliquant en tant que critère de seuil de détection pour un niveau de bruit à l'émission, un niveau de pression acoustique au moins égal à Lw — 9 par bandes de fréquences, avec Lw niveau de puissance acoustique de la source de bruit utilisée,
- à analyser le signal acoustique en appliquant en tant que critère de seuil de détection pour un niveau de bruit à la réception, un niveau de pression acoustique compris entre un niveau de pression minimal égal à Lw-DnTmax - 12 et un niveau de pression maximal égal à Lw-DnTmin + 10, avec Lw, le niveau de puissance acoustique de la source de bruit utilisée et DnTmax - DnTmin, les valeurs respectivement maximale et minimale de l'isolement par bandes de fréquences obtenues dans un bâtiment de référence,
- à analyser le signal acoustique en appliquant en tant que critère de seuil de détection pour un niveau de bruit de chocs , un niveau de pression acoustique minimal égal à LnTmin - 7 et maximal égal à LnTmax, LnTmin et LnTmax étant les valeurs minimale et maximale par bandes de fréquences du niveau de bruit de chocs correspondant à des performances de bâtiments de référence,
- à analyser le signal acoustique en appliquant en tant que critère de seuil de détection pour une mesure de durée de réverbération par méthode interrompue, un niveau de pression acoustique par bandes de fréquences au moins égal à Lw - 9, qui apparaît puis disparaît pendant la mesure,
- à analyser le signal acoustique en appliquant en tant que critère de seuil de détection pour une mesure de durée de réverbération par méthode impulsionnelle, un niveau de pression acoustique crête supérieur au niveau de pression crête maximal engendré par la source de bruit, qui apparaît puis disparaît pendant la mesure,
- à déduire un niveau de bruit à l'émission pour un niveau de pression acoustique dépassant la valeur la plus haute des critères de détection,
- à déduire un niveau de bruit de chocs pour un niveau de pression acoustique supérieur au critère de seuil de détection correspondant, pour les bandes de fréquences inférieures à 50 Hz excitées par une machine à chocs normalisée,
- en l'absence de détection d'un niveau de bruit de chocs, à déduire un niveau de bruit à la réception pour un niveau de pression acoustique qui ne satisfait pas au critère de seuil de détection pour un niveau de bruit de chocs et au critère de seuil de détection pour un niveau de bruit à l'émission et qui est supérieur à un seuil minimal défini par Lw DnTmax - 12, avec Lw, le niveau de puissance acoustique de la source de bruit utilisée et DnTmax la valeur maximale de l'isolement par bandes de fréquences correspondant à des performances de bâtiments de référence,

- à déduire un niveau de bruit de fond pour un niveau de pression acoustique inférieur à l'ensemble des critères de détection pour les différents types de mesure d'acoustique,
- à déduire une mesure de durée de réverbération par méthode interrompue comme étant une mesure de niveau à l'émission avec interruption de la source de bruit pendant l'acquisition,
- à déduire une mesure de durée de réverbération par méthode impulsionnelle comme étant un dépassement du niveau crête maximum de la source sonore impulsionnelle pendant l'acquisition.

Un autre objet de l'invention est de proposer une instrumentation pour reconnaître automatiquement un signal acoustique pour détecter un type de mesure d'acoustique d'un bâtiment.

L'instrumentation selon l'invention comporte une instrumentation acoustique pour reconnaître automatiquement un signal acoustique pour détecter un type de mesure d'acoustique du bâtiment dont les performances acoustiques sont à mesurer, l'instrumentation comportant un sonomètre placé dans l'environnement du bâtiment pour capter soit un signal acoustique aléatoire ou pseudo-aléatoire provenant d'une source de bruit placée dans l'environnement du bâtiment ou soit un bruit de chocs normalisé provenant d'une machine à chocs normalisée placée sur un sol du bâtiment, la source de bruit, la machine à chocs normalisée étant commandés en émission par un système de commande. Selon l'invention, le sonomètre comprend :

- une unité de mémorisation des critères de seuil de détection pour différents types de mesures d'acoustique du bâtiment,
- une unité d'acquisition et de traitement par bandes de fréquences, du signal acoustique acquis par le sonomètre, en appliquant les critères de seuil de détection pour les différents types de mesures d'acoustique du bâtiment, afin d'en déduire le type de mesure d'acoustique du bâtiment réalisé,
- et une interface homme-machine pour afficher le type de mesure d'acoustique du bâtiment réalisé.

L'invention concerne également une instrumentation acoustique comportant une interface homme-machine comportant un sélecteur de validation du type de mesure d'acoustique du bâtiment affiché.

Diverses autres caractéristiques ressortent de la description faite ci-dessous en référence aux dessins annexés qui montrent, à titre d'exemples non limitatifs, des formes de réalisation de l'objet de l'invention.

La **Figure 1** est une vue schématique explicitant le principe de mise en œuvre des différents types de mesures d'acoustique d'un bâtiment.

La **Figure 2** est une vue d'un exemple d'un sonomètre mis en œuvre dans le cadre de la présente invention.

La **Figure 3** est un graphe de puissance acoustique en dB en fonction des fréquences par bande de 1/3 d'octave, d'une source omnidirectionnelle sur lequel est tracée la courbe Lw-9 correspondant au critère de seuil de détection pour un niveau de bruit à l'émission Le.

La **Figure 4** est un tableau donnant pour un bâtiment, des exemples représentatifs de valeurs d'isolement en fonction des fréquences par bandes de 1/3 d'octave.

La **Figure 5** montre des courbes de niveau de bruit à la réception en dB en fonction des fréquences par bandes de 1/3 d'octave correspondant aux critères de seuil à satisfaire pour un niveau bruit à la réception Lr.

La **Figure 6** est un tableau donnant des exemples représentatifs de niveaux de bruit de chocs pour différents produits et systèmes utilisés dans un bâtiment en fonction des fréquences par bandes de 1/3 d'octave.

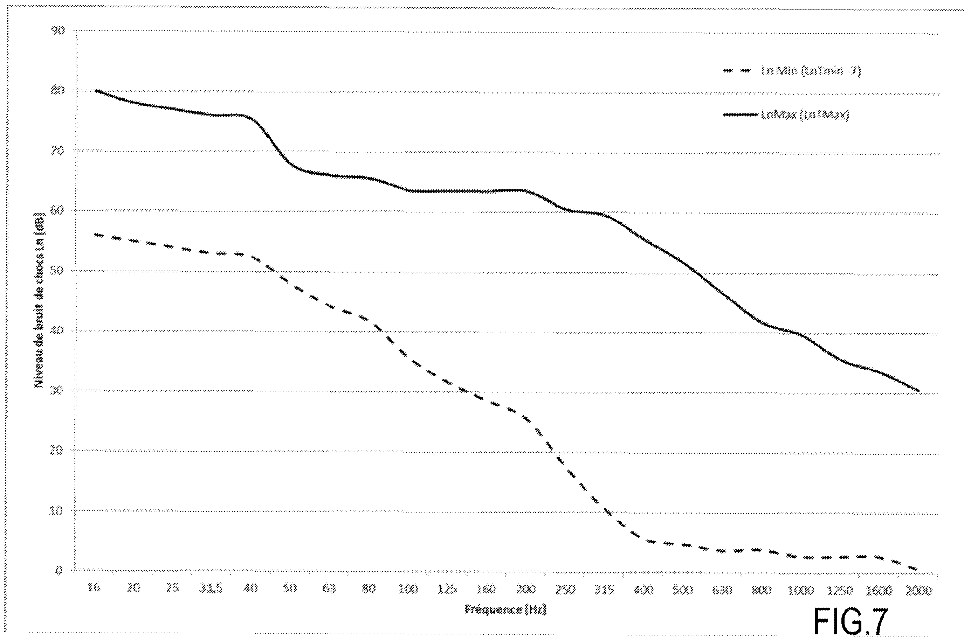

La **Figure 7** montre des courbes de niveau de bruit de chocs en dB en fonction des fréquences par bandes de 1/3 d'octave correspondant aux critères de seuil à satisfaire pour un niveau bruit de chocs.

La **Figure 8** représente le niveau de pression acoustique en dB en fonction des fréquences par bandes de 1/3 d'octave, des différents critères de seuil pour les différents types de mesure d'acoustique du bâtiment à réaliser.

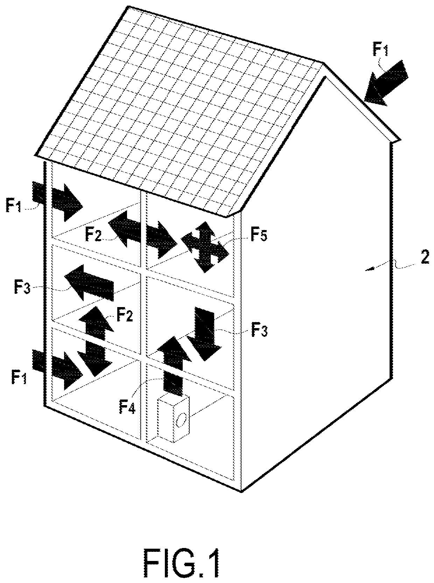

Tel que cela ressort plus précisément de la **Fig. 1**, l'objet de l'invention concerne une nouvelle technique mise en œuvre à l'aide d'une instrumentation acoustique pour reconnaître automatiquement un signal acoustique pour détecter un type de mesure d'acoustique d'un bâtiment **2** au sens général. Comme rappelé dans le préambule de la description, le bâtiment **2** doit présenter des exigences de performances acoustiques aux différentes sources de bruits : isolement aux bruits aériens extérieurs et intérieurs, niveaux de bruits d'impacts et de bruits d'équipements.

Sur la **Fig. 1**, les bruits aériens extérieurs représentés par les flèches **F1** sont émis, dans l'environnement extérieur du bâtiment, par le trafic routier, ferroviaire ou aérien. Les bruits aériens intérieurs représentés par les flèches **F2** sont générés par l'occupation des locaux (TV, discussions...). Les bruits de chocs représentés par les flèches **F3** sont générés par un planché excité en vibration (déplacement de mobilier ou de personne, chute d'objet...). Les bruits d'équipements représentés par la flèche **F4** sont émis par les appareils et installations tels que les ascenseurs, ventilation mécanique simple/double flux, installation de chauffage, robinetterie, etc. La réverbération représentée par les flèches **F5** est l'effet de résonance d'un local.

Afin de déterminer la qualité acoustique du bâtiment **2**, différents types de mesures d'acoustique du bâtiment sont réalisés selon des protocoles prédéfinis. De manière classique, les différents types de mesure d'acoustique du bâtiment dont les performances acoustiques sont à mesurer, sont un niveau de bruit à l'émission noté **Le,** un niveau de bruit à la réception noté **Lr**, un niveau de bruit de chocs noté **Ln**, une mesure de durée de réverbération noté **Tr** et un niveau de bruit de fond noté **BDF.** Il est à noter que la mesure de durée de réverbération est réalisée soit selon une méthode interrompue soit selon une méthode impulsionnelle, comme cela sera décrit dans la suite de la description.

L'instrumentation acoustique comporte une source sonore placée dans une pièce d'émission du bâtiment **2.** Cette source sonore émet un bruit large-bande aléatoire ou pseudo-aléatoire. Connaissant le niveau de puissance acoustique de la source, il est possible d'en déduire le niveau de pression qui sera mesuré dans la pièce par un sonomètre. La source sonore est une source de bruit généré par un ou plusieurs haut-parleurs, et peut être omni-directionnelle conforme à la norme ISO 10140-5. Elle sera dénommée ci-après par source de bruit. Par conception, la bande passante de la source de bruit est 80 Hz — 6,3 kHz. En deçà et au-delà de ces fréquences, l'énergie sonore restituée est au moins inférieure de 20 dB à l'énergie restituée à 1 kHz.

L'instrumentation acoustique comporte également une machine à chocs normalisée placée sur un sol du bâtiment pour émettre un bruit de chocs normalisé. Typiquement, cette machine à chocs est normalisée par la norme ISO 10140-5.

L'instrumentation acoustique comporte également une source sonore impulsionnelle comme par exemple un pistolet d'alarme, pour assurer la mesure de la durée de réverbération par méthode impulsionnelle. La mesure de la durée de réverbération par méthode interrompue est réalisée à l'aide de la source de bruit décrite ci-dessus.

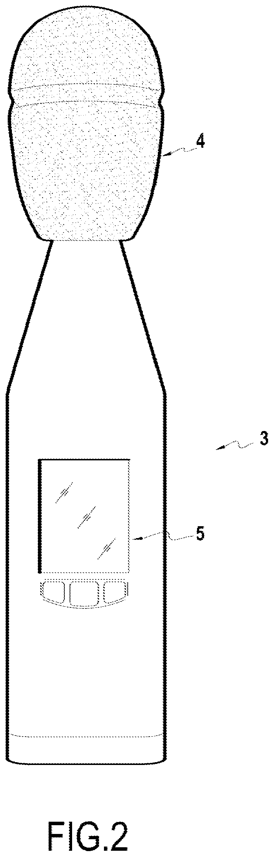

Afin de réaliser ces différents types de mesure d'acoustique du bâtiment **2**, l'instrumentation acoustique comporte également (**Fig. 2**) un sonomètre **3** placé dans l'environnement du bâtiment **2** et adapté pour capter un signal acoustique à l'aide d'un microphone **4**, et pour mesurer des niveaux de pression acoustique des bruits suivant des spécifications déterminées. Typiquement le sonomètre **3** est conforme à la série des normes CEI 61672-1, -2 et -3 (Electroacoustique — Sonomètres).

Conformément à l'invention, le sonomètre **3** comprend une unité de mémorisation pour des critères de seuil de détection pour les différents types de mesures d'acoustique du bâtiment listés ci-dessus. Ces critères de seuil de détection qui seront décrits plus précisément dans la suite de la description sont enregistrés dans l'unité de mémorisation réalisée par tous moyens appropriés tels que par exemple par un fichier de configuration de mesure stocké dans la mémoire interne de l'appareil et dans chaque fichier de mesure stocké sur une carte mémoire amovible.

Conformément à l'invention, le sonomètre **3** comprend également une unité d'acquisition et de traitement du signal acoustique acquis par le sonomètre. Cette unité assure le traitement du signal acoustique par bandes de fréquences, en appliquant les critères de seuil de détection pour les différents types de mesures d'acoustique du bâtiment, afin d'en déduire le type de mesure d'acoustique du bâtiment réalisé. Typiquement, l'analyse du signal acoustique est réalisée par octave ou 1/3 d'octave conformément à la norme CEI 61260-1. Cette unité d'acquisition et de traitement permet, à partir de S'analyse du signal acoustique acquis par le sonomètre, et en appliquant les critères de seuil de détection des types de mesures d'acoustique du bâtiment, de détecter de façon automatique, le type de mesure d'acoustique du bâtiment effectué. Cette reconnaissance automatique du type de mesure d'acoustique du bâtiment réalisé permet à l'utilisateur de gagner en confort d'utilisation en évitant la recherche dans les menus du sonomètre, du type de mesure d'acoustique du bâtiment à réaliser. Par suite, l'utilisateur gagne un temps appréciable et une plus grande fiabilité sur le déroulement de la procédure de mesure.

Conformément à l'invention, le sonomètre **3** comprend également une interface homme-machine **5** pour afficher le type de mesure d'acoustique du bâtiment, déterminé par l'unité d'acquisition et de traitement. Cette interface homme-machine **5** est réalisée de toute manière appropriée et comporte dans l'exemple illustré, un écran d'affichage. Par ailleurs, l'interface homme-machine **5** comporte un sélecteur de validation du type de mesure d'acoustique du bâtiment affiché, permettant à l'utilisateur la validation ou la modification avant enregistrement des données liées au type de mesure d'acoustique du bâtiment réalisé ou l'annulation des données de cette mesure dans le cas où manifestement la mesure a été perturbée. Par exemple, le sélecteur de validation est un bouton de commande situé à proximité de l'écran d'affichage.

Il est à noter que l'interface homme-machine **5** comprend également un bouton de commande pour piloter les cycles d'enregistrement des signaux acoustiques correspondant aux types de mesure d'acoustique du bâtiment. De manière similaire, un système de commande pilote la source de bruit, la machine à chocs normalisée et la source sonore impulsionnelle (pistolet d'alarme par exemple) afin d'émettre un signal de bruit correspondant au type de mesure d'acoustique du bâtiment à réaliser. Un tel système de commande qui est avantageusement du type à distance fait partie d'une télécommande séparée et indépendante du sonomètre.

L'unité d'acquisition et de traitement du sonomètre **3** est adaptée, par des moyens de programmation, pour analyser le signal acoustique capté, en comparant son niveau de pression acoustique, sur des bandes de fréquences déterminées, à des combinaisons des critères de seuil de détection, correspondant chacune à un type de mesure d'acoustique du bâtiment.

La description qui suit donne un exemple préféré de détermination des critères de seuil de détection pour les différents types de mesures d'acoustique du bâtiment à réaliser afin de déterminer les performances acoustiques du bâtiment.

ESTIMATION DU NIVEAU DE BRUIT A L'EMISSION **Le :**

D'une manière générale, le niveau de bruit à l'émission **Le** est mesuré à l'aide d'un sonomètre analyseur et d'une source sonore placée dans la pièce d'émission. Cette source sonore émet un bruit large-bande aléatoire ou pseudo-aléatoire. Connaissant le niveau de puissance acoustique de la source sonore, il est possible d'en déduire le niveau de pression qui sera mesuré dans la pièce par le sonomètre.

Dans le cas particulier de la mesure de bruits routiers, le niveau de bruit à l'émission **Le** est engendré directement par la source extérieure, en général une voie de circulation à flux important et continu.

Il est possible d'estimer le niveau de pression dans une pièce à partir de la norme NF EN ISO 3743-2 : Détermination des niveaux de puissance acoustique émis par les sources de bruit à partir de la pression acoustique - Méthodes d'expertise en champ réverbéré applicables aux petites sources transportables Partie 2 : Méthodes en salle d'essai réverbérante spéciale.

Il est ainsi possible d'approximer les niveaux de pression acoustique à partir d'un niveau de puissance acoustique Lw de la source de bruit :

$$L_W = \bar{L_p} - 10 \lg \frac{T_{nom}}{T_0} + 10 \lg \frac{V}{V_0} - 13 \text{ dB}$$

où

$T_{nom}$ est la durée de réverbération nominale de la salie d'essai
$T_0 = 1$ s;
V est le volume de la salie d'essai;
$V_0 = 1$ m$^3$.

D'où pour chaque bande de fréquences :

$$Le = Lw + 10\log Tnom - 10\log V + 13$$

CALCUL DES CRITERES DE SEUIL POUR LA DETECTION DU NIVEAU DE BRUIT A L'EMISSION **Le** :
Afin d'estimer le niveau de bruit à l'émission dans les pièces de bâtiments de référence (habitation, enseignement, bureaux, et hospitaliers), les limites minimales et maximales de durée de réverbération et de volume de pièce sont fixées pour les calculs suivants :

Tnom (Durée de réverbération nominale) typiquement compris entre 0.5 s et 2.5 s (classique dans le bâtiment), soit -3 < 10logTnom < 4 dB
V compris entre 25 et 75 m$^3$ (pièce de 10 à 25 m$^2$ avec plafond de 2.5 m de hauteur), soit 14 < 10logV < 19 dB

Le niveau de pression obtenu **Le** est :

$$Lw - 3 - 19 + 13 < Le < Lw + 4 - 14 + 13$$

En simplifiant :

$$Lw - 9 < Le < Lw + 3 \ (\mathbf{1})$$

Pour être capable de détecter correctement le niveau à l'émission **Le**, le critère (**1**) est à respecter.

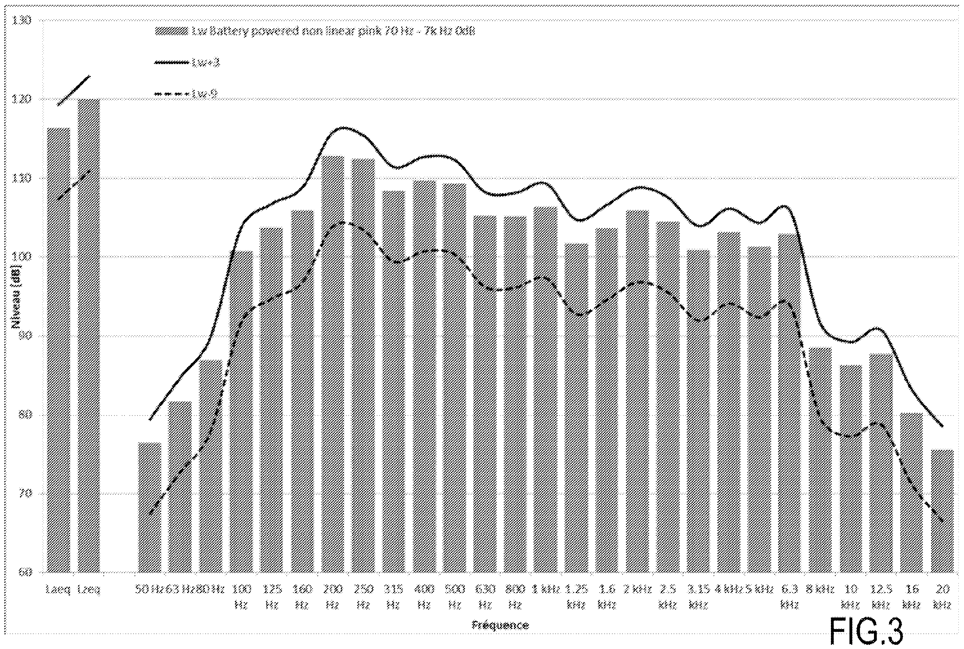

La **Fig. 3** est un exemple d'un graphe de puissance acoustique d'une source omnidirectionnelle conforme à l'ISO 10140-5 et d'un niveau de puissance acoustique Lw global non pondéré = 120dB. Afin de respecter le critère (**1**), il est nécessaire de sélectionner un niveau de déclenchement au-dessus de la courbe correspondant au niveau Lw - 9, avec Lw niveau de puissance de la source de bruit par bandes de fréquences. En conclusion, le niveau de pression acoustique mesuré sur chaque bande de fréquence doit être au moins égal à Lw - 9, de sorte que le type de mesure d'acoustique du bâtiment réalisée soit identifié au niveau de bruit à l'émission **Le.**

ESTIMATION DU NIVEAU DE BRUIT A LA RECEPTION **Lr** :

D'une manière générale, le niveau de bruit à la réception **Lr** est mesuré dans la pièce de réception à l'aide d'un sonomètre analyseur. Le niveau de pression à la réception peut être estimé en connaissant :

1) Les caractéristiques de la source d'émission (puissance acoustique de la source de bruit utilisée et durée de réverbération et volume de la salle d'émission),
2) Les caractéristiques de la paroi séparative entre la salle d'émission et la pièce de réception,
3) Les caractéristiques des transmissions latérales.

Les points 2 et 3 seront estimés pour différentes constructions (cloison séparatives de logements, salles de classe, ..., planchers) à l'aide de la norme NF EN 12354-1 : Acoustique du bâtiment - Calcul de la performance acoustique des bâtiments à partir de la performance des éléments - Partie 1 : isolement acoustique aux bruits aériens entre des locaux. Il est ainsi possible d'évaluer les niveaux de pression dans la pièce de réception.

Le niveau de bruit mesuré à la réception est :
$Lr = Le - DnT + 10log(Tr/0.5)$, où DnT est la valeur à la bande de fréquence considérée de l'isolement normalisé et Tr est la durée de réverbération du local de réception.

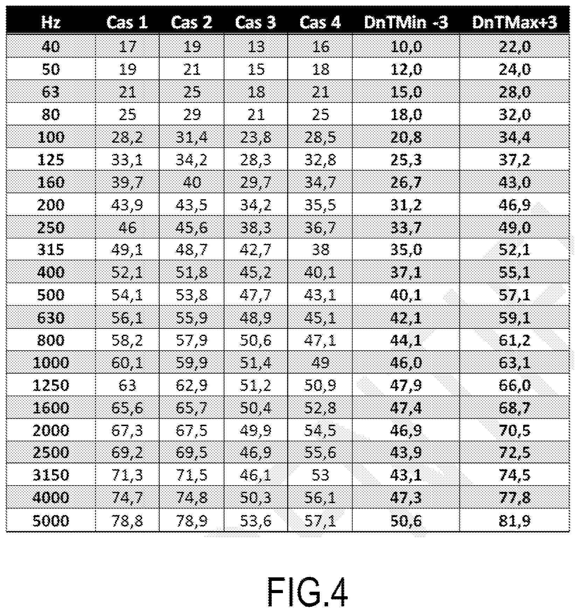

La détermination du bruit à la réception **Lr** passe par une détermination d'une plage d'isolements de locaux qui sont à caractériser. Le tableau de la figure **4** donne des valeurs d'isolement bornées correspondant à des performances de bâtiments de référence (habitation, enseignement, bureaux, et hospitaliers) conformes aux réglementations en vigueur dans le pays considéré. Elles ont été déterminées en simulant divers types de parois séparatives ou distributives habituellement rencontrées pour ces bâtiments. Afin d'augmenter le périmètre d'analyse, une tolérance de $\pm$ 3 dB a aussi été additionnée à l'isolement le plus élevé DnTmax et retranchée à l'isolement le plus faible DnTmin.

CALCUL DES CRITERES DE SEUIL POUR LA DETECTION D'UN NIVEAU DE BRUIT A LA RECEPTION **Lr** :
Le niveau de bruit à la réception **Lr** doit satisfaire pour chaque bande de fréquences :

$$Le - (DnTMax+3) + 10log(Trmin/0.5) < Lr < Le - (DnTMin-3) + 10log(Trmax/0.5)$$

Où :

Tr compris entre 0.5s (Trmin) et 2.5 sec (Trmax) (classique dans le bâtiment)

$$0 < 10log(Tr/0.5) < 7 \text{ dB}$$

D'où : **Le** - DnTMax -3 < **Lr** < **Le** - DnTMin + 3 + 7
Comme Lw - 9 < **Le** < Lw+3 (**1**), alors :

$$Lw - 9 - DnTMax -3 < Lr < Lw + 3 - DnTMin + 10$$

Finalement: Lw-DnTMax - 12 < **Lr** < Lw - DnTMin +10 (**2**)

Pour être capable de détecter correctement le niveau à la réception **Lr**, le critère (**2**) est à respecter.

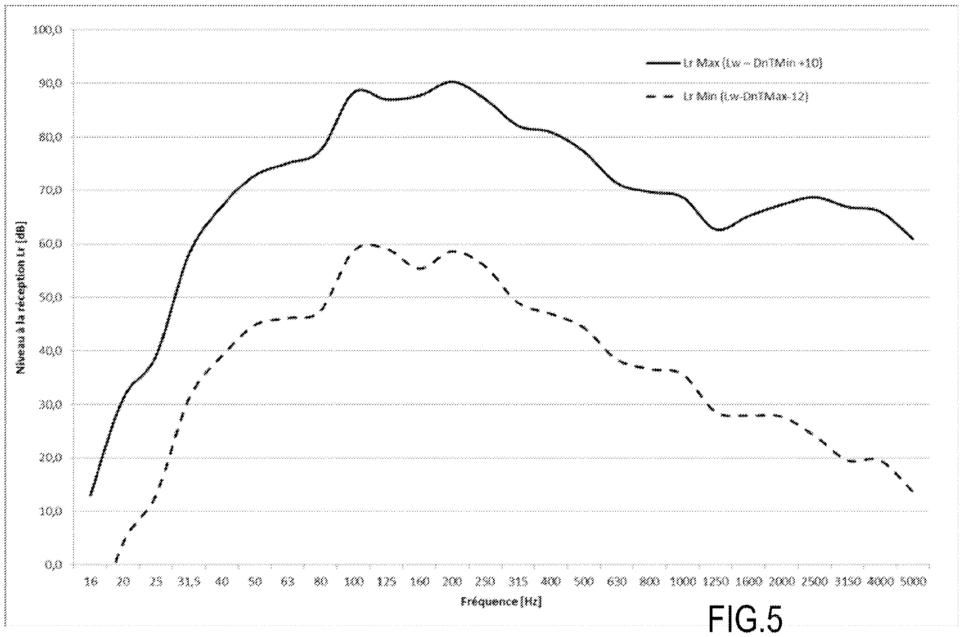

La **Fig. 5** montre les courbes correspondant aux critères de seuil à satisfaire pour un niveau bruit à la réception **Lr**, calculées à partir d'une source de bruit conforme à la norme ISO 10140-5 et d'un niveau de puissance acoustique Lw global non pondéré = 120dB.

En conclusion, le critère de seuil de détection pour un niveau de bruit à la réception **Lr** correspond à un niveau de pression acoustique compris entre un niveau de pression minimal LrMin égal à Lw - DnTmax - 12 et un niveau de pression maximal LrMax égal à Lw-DnTmin + 10, avec Lw le niveau de puissance de la source de bruit et DnTmax - DnTmin, les valeurs maximale et minimale d'isolement correspondant à des performances de bâtiments de référence (habitation, enseignement, bureaux, et hospitaliers) conformes aux réglementations en vigueur dans le pays considéré.

ESTIMATION DU NIVEAU DE BRUIT DE CHOCS **Ln** :

D'une manière générale, le niveau de bruit de chocs **Ln** est mesuré dans la pièce de réception à l'aide d'un sonomètre analyseur. Le niveau de pression à la réception peut être estimé en connaissant :

1) Les caractéristiques de la paroi séparative entre la salle d'émission et la pièce de réception,
2) Les caractéristiques des transmissions latérales.

Les points 1 et 2 seront estimés pour différentes constructions (planchers, revêtements de sol, dalles et chapes flottantes, ...) à l'aide de la norme NF EN 12354-2 : Acoustique du bâtiment - Calcul de la performance acoustique des bâtiments à partir de la performance des éléments - Partie 2 : isolement acoustique au bruit de choc entre des locaux. Il est ainsi possible d'évaluer les niveaux de pression dans la pièce de réception.

Le niveau de bruit de chocs mesuré à la réception par bande de fréquences est **Ln** où **Ln** est déterminé par :

$$LnT = \mathbf{Ln} + 10\log(Tr/0.5)$$

D'où

$$\mathbf{Ln} = LnT - 10\log(Tr/0.5)$$

Le principe est de déterminer une plage de niveaux de bruit de chocs qui seront à caractériser.

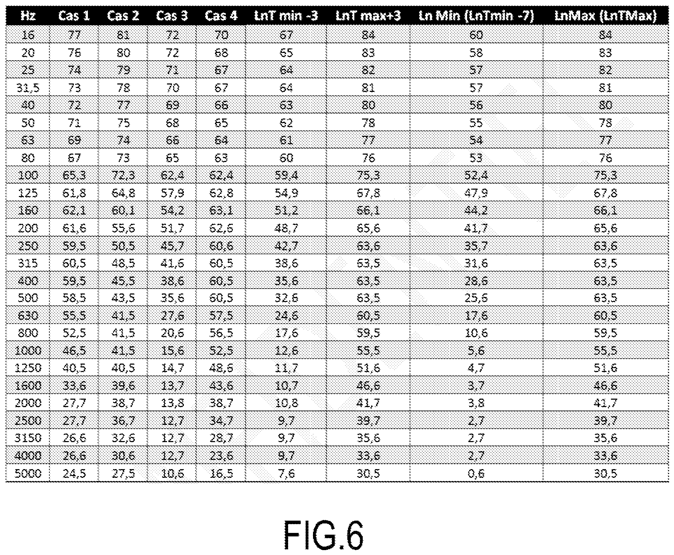

Pour cette étude, les valeurs de niveau de bruit de chocs minimale LnTmin et maximale LnTmax de quatre exemples différents de planchers et revêtements de sol sont retenues et correspondent à des performances de bâtiments de référence (habitation, enseignement, bureaux, et hospitaliers) conformes aux réglementations en vigueur dans le pays considéré et la détection se fera avec une tolérance de ± 3 dB. Les valeurs LnTmin - 3 et LnTmax + 3 sont reprises dans le tableau de la **Fig. 6**, par bandes de fréquences et pour les quatre cas précités.

Pour les fréquences de 16 à 100 Hz, les valeurs ont été estimées compte tenu de la nature de l'excitation (chocs répétés à 10 Hz) et des dimensions et résonnances de structure de la paroi émettrice (surface du plancher).

CALCUL DES CRITERES DE SEUIL DE DETECTION POUR UN NIVEAU DE BRUIT DE CHOCS **Ln** :

Le niveau de bruit de chocs Ln doit satisfaire :

$$(LnTMin-3) - 10\log(TrMax/0.5) < \mathbf{Ln} < (LnTMax+3) - 10\log$$
$$(TrMin/0.5)$$

Où :

Tr compris entre 0.5s (Trmin) et 2.5 sec (Trmax) (classique dans le bâtiment)

$$0 < 10\log(Tr/0.5) < 7 \text{ dB}$$

D'où :

$$LnTMin - 7 < Ln < LnTMax \ (3)$$

Pour être capable de détecter correctement le niveau de bruit de chocs **Ln**, le critère (3) est à respecter.

La **Fïg. 7** montre les courbes correspondant aux critères de seuil à satisfaire pour un niveau bruit de chocs **Ln.**

En conclusion, le critère de seuil de détection pour un niveau de bruit de chocs **Ln**, correspond à un niveau de pression acoustique compris entre un niveau de pression minimal LnMin égal à LnTmin - 7 et un niveau de pression acoustique maximal LnMax égal à LnTmax, les valeurs maximale et minimale correspondant à des valeurs de niveaux de bruit de chocs par bandes de fréquences des bâtiments de référence (habitation, enseignement, bureaux, et hospitaliers) conformes aux réglementations en vigueur dans le pays considéré. Elles sont indiquées dans le tableau de la **Fig. 6.**

DETERMINATION DES CRITERES DE SEUILS POUR LA DETECTION DE LA MESURE DE LA DUREE DE REVERBERATION **Tr int et Tr imp** :

La mesure de durée de réverbération s'effectue selon 2 méthodes :

- source de bruit activée puis interrompue (**Tr int**)
- source sonore impulsionnelle (**Tr imp**).

Les procédés de détection sont :

- pour le bruit interrompu : détection du seuil d'émission **Le** puis disparition de celui-ci (comme la source utilisée est la même que celle utilisée pour la détermination des critères de seuils pour la détection du niveau à l'émission **Le,** alors le seuil déterminé pour le niveau de seuil à l'émission **Le** est applicable),
- pour le bruit impulsionnel : un seuil de détection spécifique sur le niveau de pression crête permet la détection de ce mode (LCpeak par exemple). Le seuil correspond à une valeur supérieure au niveau de pression crête maximal que peut engendrer une source de bruit dans la salle d'émission afin de le discriminer correctement.

En conclusion, le critère de seuil de détection pour une mesure de durée de réverbération par bruit interrompu **Tr int** correspond à l'apparition puis à la disparition pendant l'acquisition de la mesure d'un niveau de pression acoustique engendré par une source de bruit qui doit être au moins égal à Lw - 9. Le critère de seuil de détection pour une mesure de durée de réverbération par impulsion **Tr imp** correspond à l'apparition puis disparition pendant l'acquisition de la mesure d'un niveau de pression crête supérieur au niveau de pression crête maximal de cette même source sonore.

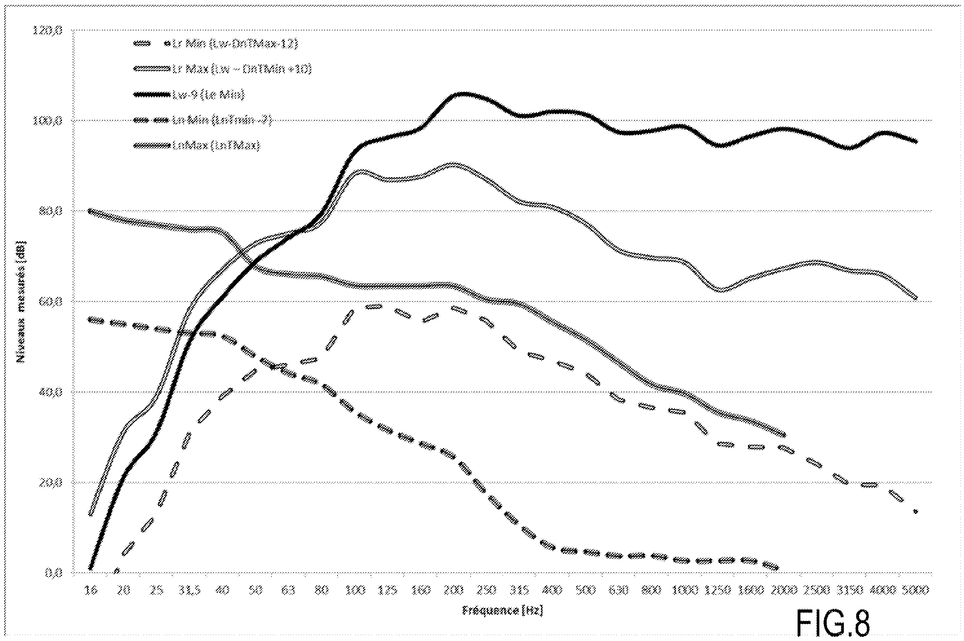

La **Fig. 8** rassemble sur un même graphique donnant le niveau de pression acoustique en fonction des fréquences, les différentes courbes correspondant aux critères de seuil pour les différents types de mesure d'acoustique du bâtiment à réaliser.

Ces différents critères de seuil qui sont mémorisés dans le sonomètre sont utilisés lors de l'analyse du signal acoustique acquis par le sonomètre. D'une manière générale, le procédé de traitement consiste à analyser le signal acoustique émis pour réaliser un type de mesure d'acoustique du bâtiment, en comparant son niveau de pression acoustique, sur des bandes de fréquences déterminées, à des combinaisons des critères de seuil de détection, correspondant chacune à un type de mesure d'acoustique du bâtiment. Ainsi, pour chaque type de mesure d'acoustique du bâtiment, il est défini une combinaison unique des critères de seuil de détection dépendant du niveau de la pression acoustique, pris en compte sur des bandes de fréquences déterminées.

Il doit être considéré que les différents critères de seuil de détection sont appliqués dans le traitement de signal acoustique avantageusement, selon un ordre de priorité défini ci-après.

PRIORISATION DES CRITERES DE SEUIL

Ainsi une mesure de durée de réverbération par méthode impulsionnelle **Tr imp** est détectée s'il y a l'apparition puis disparition pendant l'acquisition de la mesure d'un niveau de pression crête supérieur au niveau de pression crête maximal de la source sonore ;

Une mesure de niveau de bruit à l'émission **Le** est détectée lorsque le niveau de pression acoustique mesuré dépasse Lw-9 par bandes de fréquences pendant toute la durée de la mesure, avec Lw le niveau de puissance acoustique de la source de bruit utilisée. Cette mesure de niveau de bruit à l'émission est susceptible d'être détectée en cas d'absence de détection du critère de détection **Tr imp** ;

Une mesure de durée de réverbération par méthode interrompue **Tr int** correspond à l'apparition puis à la disparition pendant l'acquisition de la mesure d'un niveau de pression acoustique engendré par une source de bruit qui doit être au moins égal à Lw - 9 par bandes de fréquences, avec Lw le niveau de puissance acoustique de la source de bruit utilisée. Cette mesure de durée de réverbération par méthode interrompue **Tr int** est susceptible d'être détectée en cas d'absence du critère de détection **Tr imp.** Il est à noter que le critère de détection **Tr int**, bien qu'il soit de même nature que le critère de détection **Le,** est discriminé du critère **Le** par la disparition pendant la mesure de celui-ci ;

Une mesure de niveau de bruit de chocs **Ln** est détectée lorsque le niveau de pression acoustique mesuré est supérieur au critère de seuil de détection correspondant, pour des bandes de fréquences discriminantes excitées par une machine à chocs normalisée. En effet, il est constaté que pour les basses fréquences (typiquement en deçà de 50 Hz), seul le niveau de pression acoustique engendré par une machine à chocs normalisée dans le local de réception est significatif, car la source de bruit ne restitue que très peu d'énergie en deçà de 50 Hz dans le local d'émission, compte tenu de ses spécifications. En d'autres termes, le type de mesure d'acoustique du bâtiment réalisée est identifié comme une mesure de bruit de chocs **Ln** lorsque le niveau de pression acoustique est au moins égal à LnTmin-7 pour ces bandes de fréquence. La vérification de l'absence des critères de détection satisfaisant **Tr imp**, **Le** ou **Tr int** est appliquée.

Un niveau de bruit à la réception **Lr** est déduit pour un niveau de pression acoustique mesuré qui ne satisfait pas aux critères de détection **Tr imp, Le, Tr int** ou **Ln,** et dépasse un critère de seuil de détection correspondant, par bandes de fréquences, à un niveau au moins égal à Lw-DnTMax - 12, avec Lw le niveau de puissance acoustique de la source de bruit utilisée et DnTMax la valeur maximale de l'isolement que l'on peut obtenir dans un bâtiment de référence.

Un niveau de bruit de fond **BDF** est détecté lorsque le niveau de pression acoustique mesuré est inférieur à l'ensemble des critères de détection pour les différents types de mesure d'acoustique du bâtiment à savoir les critères de détection **Tr imp**, **Le, Tr int, Ln** et **Lr.** En d'autres termes un niveau de bruit de fond est détecté lorsqu'aucun des critères ci-dessus n'est satisfait.

En d'autres termes, le niveau de pression du signal acoustique détecté par le sonomètre est comparé sur des bandes de fréquence déterminées, successivement aux critères de seuil de détection pris selon un ordre donné, cette comparaison étant réalisée tant qu'un critère de seuil de détection n'est pas atteint ou satisfait. L'ordre dans lequel les différents critères de seuil de détection sont appliqués, est le suivant :

- critère de seuil de détection pour la mesure de durée de réverbération par méthode impulsionnelle **Tr imp**,
- critère de seuil de détection pour la mesure du niveau de bruit à l'émission **Le,**
- critère de seuil de détection pour la mesure de durée de réverbération par méthode interrompue **Tr int**,
- critère de seuil de détection pour la mesure acoustique du niveau de bruit de chocs **Ln**,
- critère de seuil de détection pour la mesure acoustique du niveau de bruit à la réception **Lr.**

Dès qu'un critère de seuil de détection est satisfait, alors l'analyse du signal acoustique est arrêtée puisque le type de mesure d'acoustique du bâtiment est détecté. Si le critère de seuil de détection pour la mesure de durée de réverbération par méthode impulsionnelle **Tr imp** n'est pas respectée alors le critère suivant selon l'ordre ci-dessus est appliqué et ainsi de suite, jusqu'à ce qu'un critère de seuil de détection soit atteint.

Si aucun des critères de seuil n'est respecté, alors un niveau de bruit de fond est détecté.

Selon une variante avantageuse de réalisation, pour les critères de seuil de détection pour le niveau de bruit de chocs **Ln** et pour le niveau de bruit à la réception **Lr,** il est considéré que ces deux critères sont atteints lorsque le niveau de pression acoustique du signal acoustique dépasse le niveau de pression minimal de ces critères à savoir respectivement, le niveau de pression minimal **LnMin** (égal à **LnTmin** - **7**) et le niveau de pression minimal **LrMin** (égal à **Lw-DnTmax** - **12**). Cette variante de réalisation n'exclut pas la prise en compte des niveaux de pression maximaux de ces critères.

Il ressort de la description qui précède que le procédé selon l'invention permet à l'utilisateur de lancer une procédure pour un type de mesure d'acoustique du bâtiment, sans aller chercher dans le menu du sonomètre, la procédure de détection correspondante. En effet selon l'invention, le signal acoustique capté par le sonomètre est reconnu automatiquement comme correspondant au type de mesure d'acoustique du bâtiment réalisé.

**Revendications**

1. Procédé pour reconnaître automatiquement un signal acoustique pour détecter un type de mesure d'acoustique d'un bâtiment, le signal acoustique étant capté par un sonomètre (**3**) placé dans l'environnement du bâtiment dont les performances acoustiques sont à mesurer, le procédé consistant à:

   - détecter soit une source de bruit placée dans l'environnement du bâtiment et assurant l'émission d'un signal acoustique aléatoire ou pseudo-aléatoire soit une machine à chocs normalisée placée sur un sol du bâtiment et assurant l'émission d'un bruit de chocs normalisé,
   - acquérir le signal acoustique en réponse à l'aide du sonomètre,
   - analyser par bandes de fréquences le signal acoustique acquis par le sonomètre en appliquant des critères de seuil de détection pour différents types de mesures d'acoustique du bâtiment, afin d'en déduire le type de mesure d'acoustique du bâtiment réalisé, entre différents types de mesure d'acoustique du bâtiment pris selon la liste suivante :

- un niveau de bruit à l'émission (**Le**),
- un niveau de bruit à la réception (**Lr**),
- un niveau de bruit de chocs (**Ln**),
- une mesure de durée de réverbération par méthode interrompue (**Tr int**) ou par méthode impulsionnelle (**Tr imp**),
- un niveau de bruit de fond (**BDF**),

- et afficher le type de mesure d'acoustique du bâtiment réalisé.

**2.** Procédé selon la revendication 1, **caractérisé en ce qu'**il consiste à analyser le signal acoustique en comparant son niveau de pression acoustique, sur des bandes de fréquences déterminées, à des combinaisons des critères de seuil de détection, correspondant chacune à un type de mesure d'acoustique du bâtiment.

**3.** Procédé selon la revendication 2, **caractérisé en ce qu'**il consiste à analyser le signal acoustique en comparant son niveau de pression acoustique, sur des bandes de fréquences déterminées, en appliquant successivement les critères de seuil de détection tant qu'un critère de seuil de détection n'est pas atteint, selon l'ordre suivant des critères de seuil de détection à savoir :

- critère de seuil de détection pour la mesure acoustique de durée de réverbération par méthode impulsionnelle (**Tr imp**),
- critère de seuil de détection pour la mesure acoustique du niveau de bruit à l'émission (**Le**),
- critère de seuil de détection pour la mesure acoustique de durée de réverbération par méthode interrompue (**Tr int**),
- critère de seuil de détection pour la mesure acoustique du niveau de bruit de chocs (**Ln**),
- et critère de seuil de détection pour la mesure acoustique du niveau de bruit à la réception (**Lr**).

**4.** Procédé selon la revendication 3, **caractérisé en ce qu'**il consiste pour les critères de seuil de détection pour le niveau de bruit de chocs (**Ln**) et pour le niveau de bruit à la réception (**Lr**), à considérer que les critères sont atteints lorsque le niveau de pression acoustique dépasse le niveau de pression minimal de ces critères.

**5.** Procédé selon la revendication 1, **caractérisé en ce qu'**il consiste à détecter soit une source sonore impulsionnelle pour assurer la mesure de durée de réverbération par méthode impulsionnelle **(Tr imp)** soit une source de bruit dont le signal acoustique apparaît et disparaît pendant la mesure, pour assurer la mesure de durée de réverbération par méthode interrompue (**Tr int**).

**6.** Procédé selon l'une des revendications 1 à 5, **caractérisé en ce qu'**il consiste à analyser le signal acoustique en appliquant en tant que critère de seuil de détection pour un niveau de bruit à l'émission (**Le**), un niveau de pression acoustique au moins égal à Lw - 9 par bandes de fréquences, avec Lw niveau de puissance acoustique de la source de bruit utilisée.

**7.** Procédé selon l'une des revendications 1 à 6, **caractérisé en ce qu'**il consiste à analyser le signal acoustique en appliquant en tant que critère de seuil de détection pour un niveau de bruit à la réception (**Lr**), un niveau de pression acoustique compris entre un niveau de pression minimal égal à Lw-DnTmax - 12 et un niveau de pression maximal égal à Lw-DnTmin + 10, avec Lw, le niveau de puissance acoustique de la source de bruit utilisée et DnTmax - DnTmin, les valeurs respectivement maximale et minimale de l'isolement par bandes de fréquences obtenues dans un bâtiment de référence.

**8.** Procédé selon l'une des revendications 1 à 7, **caractérisé en ce qu'**il consiste à analyser le signal acoustique en appliquant en tant que critère de seuil de détection pour un niveau de bruit de chocs (**Ln**), un niveau de pression acoustique minimal égal à LnTmin - 7 et maximal égal à LnTmax, LnTmin et LnTmax étant les valeurs minimale et maximale par bandes de fréquences du niveau de bruit de chocs correspondant à des performances de bâtiments de référence.

**9.** Procédé selon l'une des revendications 5 à 8, **caractérisé en ce qu'**il consiste à analyser le signal acoustique en appliquant en tant que critère de seuil de détection pour une mesure de durée de réverbération par méthode interrompue (**Tr int**), un niveau de pression acoustique par bandes de fréquences au moins égal à Lw - 9, qui apparaît puis disparaît pendant la mesure.

10. Procédé selon l'une des revendications 5 à 9, **caractérisé en ce qu'**il consiste à analyser le signal acoustique en appliquant en tant que critère de seuil de détection pour une mesure de durée de réverbération par méthode impulsionnelle (**Tr imp**), un niveau de pression acoustique crête supérieur au niveau de pression crête maximal engendré par la source de bruit, qui apparaît puis disparaît pendant la mesure.

11. Procédé selon la revendication 6, **caractérisé en ce qu'**il consiste à déduire un niveau de bruit à l'émission (**Le**) pour un niveau de pression acoustique dépassant la valeur la plus haute des critères de détection.

12. Procédé selon l'une des revendications 1 à 11, **caractérisé en ce qu'**il consiste à déduire un niveau de bruit de chocs (**Ln**) pour un niveau de pression acoustique supérieur au critère de seuil de détection correspondant, pour les bandes de fréquences inférieures à 50 Hz excitées par une machine à chocs normalisée.

13. Procédé selon l'une des revendications 1 à 11, **caractérisé en ce qu'**il consiste en l'absence de détection d'un niveau de bruit de chocs, à déduire un niveau de bruit à la réception (**Lr**) pour un niveau de pression acoustique qui ne satisfait pas au critère de seuil de détection pour un niveau de bruit de chocs et au critère de seuil de détection pour un niveau de bruit à l'émission et qui est supérieur à un seuil minimal défini par Lw DnTmax - 12, avec Lw, le niveau de puissance acoustique de la source de bruit utilisée et DnTmax la valeur maximale de l'isolement par bandes de fréquences correspondant à des performances de bâtiments de référence.

14. Procédé selon l'une des revendications 1 à 13, **caractérisé en ce qu'**il consiste à déduire un niveau de bruit de fond (**BDF**) pour un niveau de pression acoustique inférieur à l'ensemble des critères de détection pour les différents types de mesure d'acoustique.

15. Procédé selon l'une des revendications 5 à 14, **caractérisé en ce qu'**il consiste à déduire une mesure de durée de réverbération (**Tr int**) par méthode interrompue comme étant une mesure de niveau à l'émission (**Le**) avec interruption de la source de bruit pendant l'acquisition.

16. Procédé selon l'une des revendications 5 à 15, **caractérisé en ce qu'**il consiste à déduire une mesure de durée de réverbération (**Tr imp**) par méthode impulsionnelle comme étant un dépassement du niveau crête maximum de la source sonore impulsionnelle pendant l'acquisition.

17. Instrumentation acoustique pour reconnaître automatiquement un signal acoustique pour détecter un type de mesure d'acoustique du bâtiment dont les performances acoustiques sont à mesurer, l'instrumentation comportant un sonomètre (**3**) placé dans l'environnement du bâtiment pour capter soit un signal acoustique aléatoire ou pseudo-aléatoire provenant d'une source de bruit placée dans l'environnement du bâtiment ou soit un bruit de chocs normalisé provenant d'une machine à chocs normalisée placée sur un sol du bâtiment, la source de bruit, la machine à chocs normalisée étant commandés en émission par un système de commande, le sonomètre (**3**) comprenan:

> - une unité de mémorisation des critères de seuil de détection pour différents types de mesures d'acoustique du bâtiment,
> - une unité d'acquisition et de traitement par bandes de fréquences, du signal acoustique acquis par le sonomètre, en appliquant les critères de seuil de détection pour les différents types de mesures d'acoustique du bâtiment, afin d'en déduire le type de mesure d'acoustique du bâtiment réalisé, entre différents types de mesure d'acoustique du bâtiment pris selon la liste suivante :
>
> > • un niveau de bruit à l'émission (**Le**),
> > • un niveau de bruit à la réception (**Lr**),
> > • un niveau de bruit de chocs (**Ln**),
> > • une mesure de durée de réverbération par méthode interrompue (**Tr int**) ou par méthode impulsionnelle (**Tr imp),**
> > • un niveau de bruit de fond (**BDF**),
>
> - et une interface homme-machine (**5**) pour afficher le type de mesure d'acoustique du bâtiment réalisé.

**18.** Instrumentation acoustique selon la revendication 17, **caractérisée par** une interface homme-machine (**5**) comportant un sélecteur de validation du type de mesure d'acoustique du bâtiment affiché.

**Patentansprüche**

**1.** Verfahren zur automatischen Wiedererkennung eines Schallsignals zum Erfassen einer Art von Schallmessung eines Gebäudes, wobei das Schallsignal von einem Sonometer (3) erfasst wird, das in der Umgebung des Gebäudes platziert ist, dessen Schalleigenschaften zu messen sind, wobei das Verfahren besteht aus:

- Erfassen entweder einer Geräuschquelle, die in der Umgebung des Gebäudes platziert ist und das Senden eines zufälligen oder pseudozufälligen Schallsignals sicherstellt, oder einer standardisierten Trittschallmaschine, die auf einem Boden des Gebäudes platziert ist und das Senden eines standardisierten Trittschallgeräuschs sicherstellt,
- Erlangen des Schallsignals als Reaktion mit Hilfe des Sonometers,
- Analysieren des durch das Sonometer erlangten Schallsignals nach Frequenzbändern unter Anwendung von Schwellenerfassungskriterien für verschiedene Arten von Schallmessungen des Gebäudes, um davon die umgesetzte Art der Schallmessung des Gebäudes aus unterschiedlichen Arten der Schallmessung des Gebäudes aus der folgenden Liste abzuleiten:

- einen Geräuschpegel beim Senden (Le),
- einen Geräuschpegel beim Empfang (Lr),
- einen Geräuschpegel von Trittschall (Ln),
- eine Messung der Dauer des Nachhalls durch ein unterbrochenes Verfahren (Tr int) oder durch ein gepulstes Verfahren (Tr imp),
- einen Grundgeräuschpegel (BDF),

- und Anzeigen der umgesetzten Art der Schallmessung des Gebäudes.

**2.** Verfahren nach Anspruch 1, **dadurch gekennzeichnet, dass** es aus dem Analysieren des Schallsignals durch Vergleichen seines Schalldruckpegels auf den bestimmten Frequenzbändern mit Kombinationen der Schwellenerfassungskriterien entsprechend jeweils einer Art der Schallmessung des Gebäudes besteht.

**3.** Verfahren nach Anspruch 2, **dadurch gekennzeichnet, dass** es aus dem Analysieren des Schallsignals durch Vergleichen seines Schalldruckpegels auf den bestimmten Frequenzbändern besteht, indem sukzessive die Schwellenerfassungskriterien, solange ein Schwellenerfassungskriterium nicht erreicht ist, gemäß der folgenden Reihenfolge an Schwellenerfassungskriterien angewandt werden:

- Schwellenerfassungskriterium für die Schallmessung der Dauer des Nachhalls durch ein gepulstes Verfahren (Tr imp),
- Schwellenerfassungskriterium für die Schallmessung des Geräuschpegels beim Senden (Le),
- Schwellenerfassungskriterium für die Schallmessung der Dauer des Nachhalls durch ein unterbrochenes Verfahren (Tr int),
- Schwellenerfassungskriterium für die Schallmessung des Geräuschpegels von Trittschall (Ln),
- und Schwellenerfassungskriterium für die Schallmessung des Geräuschpegels beim Empfang (Lr).

**4.** Verfahren nach Anspruch 3, **dadurch gekennzeichnet, dass** es daraus besteht, für die Schwellenerfassungskriterien für den Geräuschpegel von Trittschall (Ln) und für den Geräuschpegel beim Empfang (Lr) zu beachten, dass die Kriterien erfüllt sind, wenn der Schalldruckpegel den Mindestdruckpegel dieser Kriterien überschreitet.

**5.** Verfahren nach Anspruch 1, **dadurch gekennzeichnet, dass** es daraus besteht, entweder eine gepulste Schallquelle zum Sicherstellen der Messung der Dauer des Nachhalls durch ein gepulstes Verfahren (Tr imp) oder eine Geräuschquelle zu erfassen, deren Schallsignal während der Messung auftritt und verschwindet, um die Messung der Dauer des Nachhalls durch ein unterbrochenes Verfahren (Tr int) sicherzustellen.

**6.** Verfahren nach einem der Ansprüche 1 bis 5, **dadurch gekennzeichnet, dass** es daraus besteht, das Schallsignal zu analysieren, indem als Schwellenerfassungskriterium für einen Geräuschpegel beim Senden (Le) ein Schalldruckpegel zumindest gleich Lw - 9 nach Frequenzbändern angewandt wird, wobei Lw der Schallleistungspegel der verwendeten Geräuschquelle ist.

7. Verfahren nach einem der Ansprüche 1 bis 6, **dadurch gekennzeichnet, dass** es daraus besteht, das Schallsignal zu analysieren, indem als Schwellenerfassungskriterium für einen Geräuschpegel beim Empfang (Lr) ein Schalldruckpegel angewandt wird, der zwischen einem Mindestdruckpegel gleich Lw-DnTmax - 12 und einem Höchstdruckpegel gleich Lw-DnTmin + 10 liegt, wobei Lw der Schallleistungspegel der verwendeten Geräuschquelle ist und DnTmax - DnTmin die jeweiligen Höchst- und Mindestwerte der Isolierung nach Frequenzbändern sind, die in einem Referenzgebäude erhalten werden.

8. Verfahren nach einem der Ansprüche 1 bis 7, **dadurch gekennzeichnet, dass** es daraus besteht, das Schallsignal zu analysieren, indem als Schwellenerfassungskriterium für einen Geräuschpegel von Trittschall (Ln) ein Schalldruckpegel mindestens gleich LnTmin — 7 und höchstens gleich LnTmax angewandt wird, wobei LnTmin und LnTmax die Mindest- und Höchstwerte nach Frequenzbändern des Geräuschpegels von Trittschall sind, die Eigenschaften von Referenzgebäuden entsprechen.

9. Verfahren nach einem der Ansprüche 5 bis 8, **dadurch gekennzeichnet, dass** es daraus besteht, das Schallsignal zu analysieren, indem als Schwellenerfassungskriterium für eine Messung der Dauer des Nachhalls durch ein unterbrochenes Verfahren (Tr int) ein Schalldruckpegel nach Frequenzbändern von zumindest gleich Lw - 9 angewandt wird, der während der Messung auftritt und dann verschwindet.

10. Verfahren nach einem der Ansprüche 5 bis 9, **dadurch gekennzeichnet, dass** es daraus besteht, das Schallsignal zu analysieren, indem als Schwellenerfassungskriterium für eine Messung der Dauer des Nachhalls durch ein gepulstes Verfahren (Tr imp) ein Spitzenschalldruckpegel höher als der höchste Spitzendruckpegel angewandt wird, der von der Geräuschquelle erzeugt wird, der während der Messung auftritt und dann verschwindet.

11. Verfahren nach Anspruch 6, **dadurch gekennzeichnet, dass** es daraus besteht, einen Geräuschpegel beim Senden (Le) für einen Schalldruckpegel abzuleiten, der den höchsten Wert der Erfassungskriterien überschreitet.

12. Verfahren nach einem der Ansprüche 1 bis 11, **dadurch gekennzeichnet, dass** es daraus besteht, einen Geräuschpegel von Trittschall (Ln) für einen Schalldruckpegel, der höher als das entsprechende Schwellenerfassungskriterium ist, für die Frequenzbänder kleiner 50 Hz abzuleiten, die durch eine standardisierte Trittschallmaschine angeregt werden.

13. Verfahren nach einem der Ansprüche 1 bis 11, **dadurch gekennzeichnet, dass** es daraus besteht, bei Nichtvorhandensein der Erfassung eines Geräuschpegels von Trittschall einen Geräuschpegel beim Empfang (Lr) für einen Schalldruckpegel abzuleiten, der das Schwellenerfassungskriterium für einen Geräuschpegel von Trittschall nicht erfüllt, und das Schwellenerfassungskriterium für einen Geräuschpegel beim Senden und der höher als ein Mindestschwellenwert definiert durch Lw DnTmax - 12 ist, wobei Lw der Schallleistungspegel der verwendeten Geräuschquelle ist und DnTmax der Höchstwert der Isolierung nach Frequenzbändern entsprechend Eigenschaften von Referenzgebäuden ist.

14. Verfahren nach einem der Ansprüche 1 bis 13, **dadurch gekennzeichnet, dass** es daraus besteht, einen Grundgeräuschpegel (BDF) für einen Schalldruckpegel kleiner als alle Erfassungskriterien für die unterschiedlichen Arten von Schallmessung abzuleiten.

15. Verfahren nach einem der Ansprüche 5 bis 14, **dadurch gekennzeichnet, dass** es daraus besteht, eine Messung der Dauer des Nachhalls (Tr int) durch ein unterbrochenes Verfahren als Messung des Pegels beim Senden (Le) mit Unterbrechung der Geräuschquelle während des Erlangens abzuleiten.

16. Verfahren nach einem der Ansprüche 5 bis 15, **dadurch gekennzeichnet, dass** es daraus besteht, eine Messung der Dauer des Nachhalls (Tr imp) durch ein gepulstes Verfahren als Überschreitung des höchsten Spitzenwertes der gepulsten Schallquelle während des Erlangens abzuleiten.

17. Schallmessausrüstung zur automatischen Wiedererkennung eines Schallsignals zum Erfassen einer Art von Schallmessung des Gebäudes, dessen Schalleigenschaften zu messen sind, wobei die Messausrüstung ein Sonometer (3) beinhaltet, das in der Umgebung des Gebäudes platziert ist, um entweder ein zufälliges oder pseudozufälliges Schallsignal, das von einer Geräuschquelle ausgeht, die in der Umgebung des Gebäudes platziert ist, oder ein standardisiertes Trittschallgeräusch zu erfassen, das von einer standardisierten Trittschallmaschine ausgeht, die auf einem Boden des Gebäudes platziert ist, wobei die Geräuschquelle und die standardisierte Trittschallmaschine durch Sendung durch ein Steuersystem gesteuert werden, wobei das Sonometer (3) umfasst:

- eine Speichereinheit für Schwellenerfassungskriterien für unterschiedliche Arten von Schallmessungen des Gebäudes,
- eine Erlangungs- und Verarbeitungseinheit für das durch das Sonometer erlangte Schallsignal nach Frequenzbändern durch Anwendung der Schwellenerfassungskriterien für die unterschiedlichen Arten von Schallmessungen des Gebäudes, um davon die umgesetzte Art der Schallmessung des Gebäudes aus unterschiedlichen Arten der Schallmessung des Gebäudes aus der folgenden Liste abzuleiten:

 • einen Geräuschpegel beim Senden (Le),
 • einen Geräuschpegel beim Empfang (Lr),
 • einen Geräuschpegel von Trittschall (Ln),
 • eine Messung der Dauer des Nachhalls durch ein unterbrochenes Verfahren (Tr int) oder durch ein gepulstes Verfahren (Tr imp),
 • einen Grundgeräuschpegel (BDF),

- und eine Mensch-Maschine-Schnittstelle (5) zum Anzeigen der umgesetzten Art der Schallmessung des Gebäudes.

18. Schallmessausrüstung nach Anspruch 17, **gekennzeichnet durch** eine Mensch-Maschine-Schnittstelle (5), die eine Auswahlvorrichtung zur Validierung der angezeigten Art der Schallmessung des Gebäudes beinhaltet.


**Claims**

1. Method for automatically recognizing an acoustic signal for detecting a type of acoustic measurement of a building, the acoustic signal being picked up by a sound meter (3) placed in the environment of the building, the acoustic performance of which is to be measured, the method comprising:

- detecting either a noise source placed in the environment of the building and emitting a random or pseudo-random acoustic signal or a standardized tapping machine placed on a floor of the building and emitting a standardized tapping noise,
- acquiring the acoustic signal in response using the sound meter,
- analyzing by frequency band the acoustic signal acquired by the sound meter by applying detection threshold criteria for different types of acoustic measurements of the building, in order to deduce therefrom the type of acoustic measurement of the building taken, between different types of acoustic measurement of the building taken from among the following list:

 • a noise level in transmit mode (Le),
 • a noise level in receive mode (Lr),
 • a tapping noise level (Ln),
 • a measurement of reverberation time by interrupted method (Tr int) or by pulsed method (Tr imp),
 • a background noise level (BDF),

- and displaying the type of acoustic measurement of the building taken.

2. The method as claimed in claim 1, **characterized in that** it consists in analyzing the acoustic signal by comparing its acoustic pressure level, over set frequency bands, with combinations of the detection threshold criteria, each corresponding to a type of acoustic measurement of the building.

3. The method as claimed in claim 2, **characterized in that** it consists in analyzing the acoustic signal by comparing its acoustic pressure level, over set frequency bands, by successively applying the detection threshold criteria for as long as a detection threshold is not reached, according to the following order of detection threshold criteria, namely:

- detection threshold criterion for the acoustic measurement of the reverberation time by pulsed method (Tr imp),
- detection threshold criterion for the acoustic measurement of the noise level in transmit mode (Le),
- detection threshold criterion for the acoustic measurement of the reverberation time by interrupted method (Tr int),
- detection threshold criterion for the acoustic measurement of the tapping noise level (Ln),
- and detection threshold criterion for the acoustic measurement of the noise level in receive mode (Lr).

4. The method as claimed in claim 3, **characterized in that** it consists for the detection threshold criteria for the tapping noise level (Ln) and for the noise level in receive mode (Lr), in considering that the criteria are achieved when the acoustic pressure level exceeds the minimum pressure level of these criteria.

5. The method as claimed in claim 1, **characterized in that** it consists in detecting either a pulsed sound source for taking the measurement of reverberation time by pulsed method (Tr imp), or a noise source, the acoustic signal of which appears and disappears during the measurement, to take the measurement of reverberation time by interrupted method (Tr int).

6. The method as claimed in one of claims 1 to 5, **characterized in that** it consists in analyzing the acoustic signal by applying as detection threshold criterion for a noise level in transmit mode (Le), an acoustic pressure level at least equal to Lw - 9 by frequency band, with Lw the acoustic power level of the noise source used.

7. The method as claimed in one of claims 1 to 6, **characterized in that** it consists in analyzing the acoustic signal by applying as detection threshold criterion for a noise level in receive mode (Lr), an acoustic pressure level between a minimum pressure level equal to Lw-DnTmax - 12 and a maximum pressure level equal to Lw-DnTmin + 10, with Lw the acoustic power level of the noise source used and DnTmax - DnTmin, respectively the maximum and minimum values of the isolation by frequency band obtained in a reference building.

8. The method as claimed in one of claims 1 to 7, **characterized in that** it consists in analyzing the acoustic signal by applying as detection threshold criterion for a tapping noise level (Ln), a minimum acoustic pressure level equal to LnTmin - 7 and maximum acoustic pressure level equal to LnTmax, LnTmin and LnTmax being the minimum and maximum values by frequency band of the tapping noise level corresponding to reference building performance.

9. The method as claimed in one of claims 5 to 8, **characterized in that** it consists in analyzing the acoustic signal by applying as detection threshold criterion for a measurement of reverberation time by interrupted method (Tr int), an acoustic pressure level by frequency band at least equal to Lw - 9, which appears then disappears during the measurement.

10. The method as claimed in one of claims 5 to 9, **characterized in that** it consists in analyzing the acoustic signal by applying as detection threshold criterion for a measurement of reverberation time by pulsed method (Tr imp), a peak acoustic pressure level greater than the maximum peak pressure level generated by the noise source, which appears then disappears during the measurement.

11. The method as claimed in claim 6, **characterized in that** it consists in deducing a noise level in transmit mode (Le) for an acoustic pressure level exceeding the highest value of the detection criteria.

12. The method as claimed in one of claims 1 to 11, **characterized in that** it consists in deducing a tapping noise level (Ln) for an acoustic pressure level greater than the corresponding detection threshold criterion, for frequency bands less than 50 Hz excited by a standardized tapping machine.

13. The method as claimed in one of claims 1 to 11, **characterized in that** it consists in the absence of detection of a tapping noise level, in deducing a noise level in receive mode (Lr) for an acoustic pressure level that does not satisfy the detection threshold criterion for a tapping noise level and to the detection threshold criterion for a noise level in transmit mode and which is greater than a minimum threshold defined by Lw DnTmax - 12, with Lw the acoustic power level of the noise source used and DnTmax the maximum value of the isolation by frequency band corresponding to reference building performance.

14. The method as claimed in one of claims 1 to 13, **characterized in that** it consists in deducing a background noise level (BDF) for an acoustic pressure level less than all the detection criteria for the different types of acoustic measurement.

15. The method as claimed in one of claims 5 to 14, **characterized in that** it consists in deducing a measurement of reverberation time (Tr int) by interrupted method as being a measurement of the level in transmit mode (Le) with interruption of the noise source during the acquisition.

**16.** The method as claimed in one of claims 5 to 15, **characterized in that** it consists in deducing a measurement of reverberation time (Tr imp) by pulsed method as being an exceeding of the maximum peak level of the pulsed sound source during the acquisition.

**17.** An acoustic instrumentation for automatically recognizing an acoustic signal for detecting a type of acoustic measurement of the building, the acoustic performances of which are to be measured, the instrumentation including a sound meter (3) placed in the environment of the building to pick up either a random or pseudo-random acoustic signal coming from a noise source placed in the environment of the building or a standardized tapping noise coming from a standardized tapping machine placed on a floor of the building, the noise source, the standardized tapping machine being controlled during transmission by a control system, the sound meter (3) comprising:

- a unit for storing a number of detection threshold criteria for different types of acoustic measurement of the building,
- a unit for acquiring and processing, by frequency band, the acoustic signal acquired by the sound meter, by applying the detection threshold criteria for the different types of acoustic measurement of the building, in order to deduce therefrom the type of acoustic measurement of the building taken, between different types of acoustic measurement of the building taken according to the following list:

  • a noise level in transmit mode (Le),
  • a noise level in receive mode (Lr),
  • a tapping noise level (Ln),
  • a measurement of reverberation time by interrupted method (Tr int) or by pulsed method (Tr imp),
  • a background noise level (BDF),

- and a human-machine interface (5) for displaying the type of acoustic measurement of the building taken.

**18.** The acoustic instrumentation as claimed in claim 17, **characterized by** a human-machine interface (5) including a selector switch for confirming the type of acoustic measurement of the building displayed.

FIG.1

FIG.2

FIG.3

| Hz | Cas 1 | Cas 2 | Cas 3 | Cas 4 | DnTMin -3 | DnTMax+3 |
|---|---|---|---|---|---|---|
| 40 | 17 | 19 | 13 | 16 | 10,0 | 22,0 |
| 50 | 19 | 21 | 15 | 18 | 12,0 | 24,0 |
| 63 | 21 | 25 | 18 | 21 | 15,0 | 28,0 |
| 80 | 25 | 29 | 21 | 25 | 18,0 | 32,0 |
| 100 | 28,2 | 31,4 | 23,8 | 28,5 | 20,8 | 34,4 |
| 125 | 33,1 | 34,2 | 28,3 | 32,8 | 25,3 | 37,2 |
| 160 | 39,7 | 40 | 29,7 | 34,7 | 26,7 | 43,0 |
| 200 | 43,9 | 43,5 | 34,2 | 35,5 | 31,2 | 46,9 |
| 250 | 46 | 45,6 | 38,3 | 36,7 | 33,7 | 49,0 |
| 315 | 49,1 | 48,7 | 42,7 | 38 | 35,0 | 52,1 |
| 400 | 52,1 | 51,8 | 45,2 | 40,1 | 37,1 | 55,1 |
| 500 | 54,1 | 53,8 | 47,7 | 43,1 | 40,1 | 57,1 |
| 630 | 56,1 | 55,9 | 48,9 | 45,1 | 42,1 | 59,1 |
| 800 | 58,2 | 57,9 | 50,6 | 47,1 | 44,1 | 61,2 |
| 1000 | 60,1 | 59,9 | 51,4 | 49 | 46,0 | 63,1 |
| 1250 | 63 | 62,9 | 51,2 | 50,9 | 47,9 | 66,0 |
| 1600 | 65,6 | 65,7 | 50,4 | 52,8 | 47,4 | 68,7 |
| 2000 | 67,3 | 67,5 | 49,9 | 54,5 | 46,9 | 70,5 |
| 2500 | 69,2 | 69,5 | 46,9 | 55,6 | 43,9 | 72,5 |
| 3150 | 71,3 | 71,5 | 46,1 | 53 | 43,1 | 74,5 |
| 4000 | 74,7 | 74,8 | 50,3 | 56,1 | 47,3 | 77,8 |
| 5000 | 78,8 | 78,9 | 53,6 | 57,1 | 50,6 | 81,9 |

# FIG.4

FIG.5

| Hz | Cas 1 | Cas 2 | Cas 3 | Cas 4 | LnT min -3 | LnT max+3 | Ln Min (LnTmin -7) | LnMax (LnTMax) |
|---|---|---|---|---|---|---|---|---|
| 16 | 77 | 81 | 72 | 70 | 67 | 84 | 60 | 84 |
| 20 | 76 | 80 | 72 | 68 | 65 | 83 | 58 | 83 |
| 25 | 74 | 79 | 71 | 67 | 64 | 82 | 57 | 82 |
| 31,5 | 73 | 78 | 70 | 67 | 64 | 81 | 57 | 81 |
| 40 | 72 | 77 | 69 | 66 | 63 | 80 | 56 | 80 |
| 50 | 71 | 75 | 68 | 65 | 62 | 78 | 55 | 78 |
| 63 | 69 | 74 | 66 | 64 | 61 | 77 | 54 | 77 |
| 80 | 67 | 73 | 65 | 63 | 60 | 76 | 53 | 76 |
| 100 | 65,3 | 72,3 | 62,4 | 62,4 | 59,4 | 75,3 | 52,4 | 75,3 |
| 125 | 61,8 | 64,8 | 57,9 | 62,8 | 54,9 | 67,8 | 47,9 | 67,8 |
| 160 | 62,1 | 60,1 | 54,2 | 63,1 | 51,2 | 66,1 | 44,2 | 66,1 |
| 200 | 61,6 | 55,6 | 51,7 | 62,6 | 48,7 | 65,6 | 41,7 | 65,6 |
| 250 | 59,5 | 50,5 | 45,7 | 60,6 | 42,7 | 63,6 | 35,7 | 63,6 |
| 315 | 60,5 | 48,5 | 41,6 | 60,5 | 38,6 | 63,5 | 31,6 | 63,5 |
| 400 | 59,5 | 45,5 | 38,6 | 60,5 | 35,6 | 63,5 | 28,6 | 63,5 |
| 500 | 58,5 | 43,5 | 35,6 | 60,5 | 32,6 | 63,5 | 25,6 | 63,5 |
| 630 | 55,5 | 41,5 | 27,6 | 57,5 | 24,6 | 60,5 | 17,6 | 60,5 |
| 800 | 52,5 | 41,5 | 20,6 | 56,5 | 17,6 | 59,5 | 10,6 | 59,5 |
| 1000 | 46,5 | 41,5 | 15,6 | 52,5 | 12,6 | 55,5 | 5,6 | 55,5 |
| 1250 | 40,5 | 40,5 | 14,7 | 48,6 | 11,7 | 51,6 | 4,7 | 51,6 |
| 1600 | 33,6 | 39,6 | 13,7 | 43,6 | 10,7 | 46,6 | 3,7 | 46,6 |
| 2000 | 27,7 | 38,7 | 13,8 | 38,7 | 10,8 | 41,7 | 3,8 | 41,7 |
| 2500 | 27,7 | 36,7 | 12,7 | 34,7 | 9,7 | 39,7 | 2,7 | 39,7 |
| 3150 | 26,6 | 32,6 | 12,7 | 28,7 | 9,7 | 35,6 | 2,7 | 35,6 |
| 4000 | 26,6 | 30,6 | 12,7 | 23,6 | 9,7 | 33,6 | 2,7 | 33,6 |
| 5000 | 24,5 | 27,5 | 10,6 | 16,5 | 7,6 | 30,5 | 0,6 | 30,5 |

# FIG.6

23

FIG.7

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *la fiche technique - Sonomètre-analyseur d'acoustique du bâtiment types 2250-J, 2270-J et 2270-K,* 01 Janvier 2013, 1-16